# EUROPEAN PATENT SPECIFICATION

(11) **EP 1 847 862 B1**
(45) Date of publication and mention of the grant of the patent: **09.07.2014**
(21) Application number: 06017969.4
(22) Date of filing: 29.08.2006
(51) Int. Cl.: G02B 6/293

(54) **Wavelength dispersion compensation device**
Vorrichtung zur Kompensation von Wellenlängendispersion
Dispositif de compensation de dispersion de longueur d'onde

(30) Priority: 07.04.2006 JP 2006106497
(43) Date of publication of application: 24.10.2007
(73) Proprietor: FUJITSU LIMITED, Kawasaki-shi, Kanagawa 211-8588 (JP)
(72) Inventor: Shibata, Kohei Fujitsu Limited, Kawasaki-shi Kanagawa 211-8588 (JP); Fukushima, Nobuhiro Fujitsu Limited, Kawasaki-shi Kanagawa 211-8588 (JP)
(74) Representative: HOFFMANN EITLE

(56) References cited:
- WO-A-2005/026798
- US-A1- 2003 035 608
- US-A1- 2006 013 529
- "Advanced Etalon Design Considerations" 2 November 2003 (2003-11-02), XP002450311 Retrieved from the Internet: URL:http://www.precisionphotonics.com/Tech nology/datafile.asp?FileID=32>
- ANATOLY FRENKEL ET AL: "ANGLE-TUNED ETALON FILTERS FOR OPTICAL CHANNEL SELECTION IN HIGH DENSITY WAVELENGTH DIVISION MULTIPLEXED SYSTEMS" JOURNAL OF LIGHTWAVE TECHNOLOGY, IEEE SERVICE CENTER, NEW YORK, NY, US, vol. 7, no. 4, 1 April 1989 (1989-04-01), pages 615-624, XP000032961 ISSN: 0733-8724

## Description

### CROSS-REFERENCE TO RELATED APPLICATIONS

This application is based upon and claims the benefit of priority from the prior Japanese Patent Application No. 2006-106497, filed on April 7, 2006, the entire contents of which are incorporated herein by reference.

### BACKGROUND OF THE INVENTION

### 1. Field of the Invention

The present invention relates a dispersion compensation device used in optical communication.

### 2. Description of the Related Art

When an optical signal pulse transmission is performed using an optical fiber, a speed of transmission through the optical fiber differs depending on a light wavelength. Therefore, as a transmission distance increases, a signal pulse waveform flattens. This phenomenon is referred to as wavelength dispersion. When the wavelength dispersion is generated, a reception level is significantly degraded. For example, when a single mode fiber (SMF) is used, a wavelength dispersion of -15 to -16 ps/nm·km is generated near a wavelength of 1.55 micrometers (µm) that is often used in optical pulse communication. In wavelength dispersion compensation (referred to as dispersion compensation), wavelength dispersion of the same amount as the wavelength dispersion generated when the optical fiber is used is conversely added.

Currently, a dispersion compensating fiber (DCF) is the most common optical fiber used to perform dispersion compensation. The DCF is designed to generate dispersion (structure dispersion) that is an opposite of material dispersion of a fiber material. The opposing dispersion is generated by a specific refractive index distribution. In total, the DCF generates dispersion that is an opposite of dispersion generated in an ordinary SMF (dispersion compensation of about 5 to 10 times the amount generated in an SMF of a same length). The DCF is connected to the SMF at a relay station, and a total dispersion is zero (cancelled).

In recent years, in response to increasing communication demands, further increase in capacity is required for large capacity transmission using wavelength division multiplexing (WDM). In addition to reduction in intervals between wavelength multiplexing, increase in communication speed is required (for example, 40 Gb/s). As a result, wavelength dispersion tolerance decreases when relay distances are the same. Temperature fluctuations generated when the wavelength dispersion is generated using SMF also requires compensation. The temperature fluctuations are conventionally not a problem. An actualization of a wavelength dispersion compensator that can change the compensation amount is required, in addition to the conventional fixed type DCF.

Specifically, a wavelength division type optical dispersion compensator using an etalon (for example, Japanese Patent Laid-open Publication Nos. 2002-267834 and 2003-195192). A tunable optical dispersion compensator using a reflective etalon is disclosed as a reflection type wavelength dispersion compensator (for example, Japanese Patent Laid-open Publication No. 2004-191521).

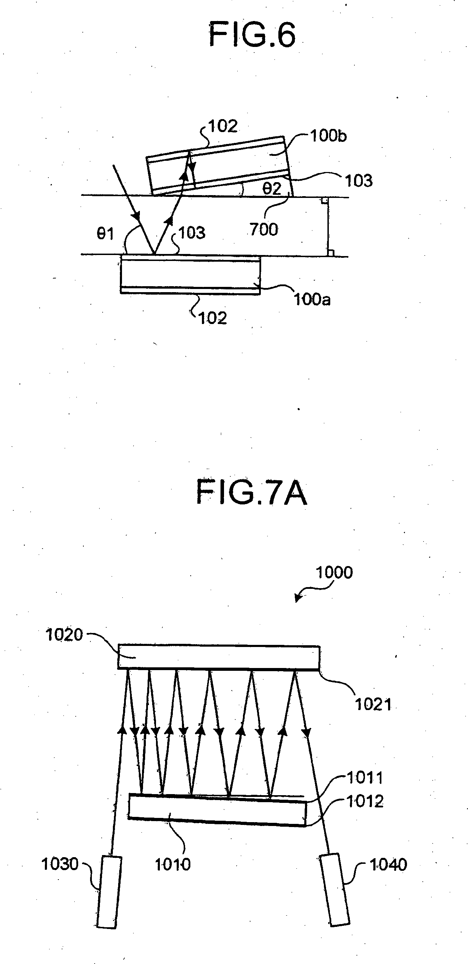

Fig. 7A is a schematic of a conventional tunable optical dispersion compensator. A tunable optical dispersion compensator 1000 includes an etalon 1010 and a mirror 1020. The etalon 1010 is a Gires-Tournois (GT) etalon. A reflective film 1011 is formed on one side of the etalon 1010. The reflective film 1011 has reflectance that continuously differs along a certain direction. A reflective film 1012 is formed on another side of the etalon 1010. The reflective film 1012 has approximately 100% reflectance. The mirror 1020 has a high-reflectance reflective film 1021. The mirror 1020 is placed at a slight angle to the etalon 1010. A beam emitted from a collimator 1030 is reflected by the mirror 1020, resonated by the etalon 1010, and enters a collimator 1040.

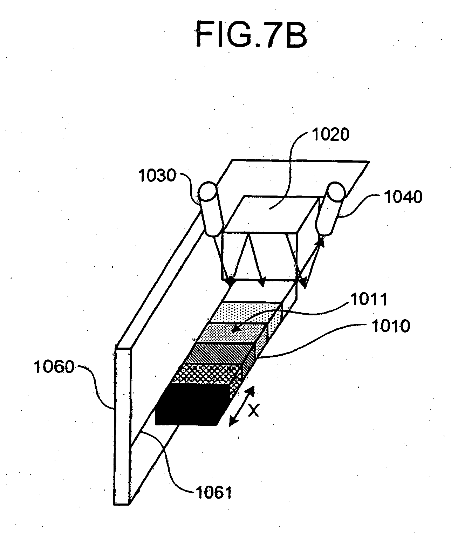

Fig. 7B is a perspective view of the conventional tunable optical dispersion compensator. As shown in Fig. 7B, the etalon 1010 is attached to a slide rail 1061 on a linear slide 1060. The etalon 1010 slides along a direction X. A reflectance of the reflective film 1011 continuously changes along the direction X. A dispersion compensation amount can be changed by the sliding of the etalon 1010.

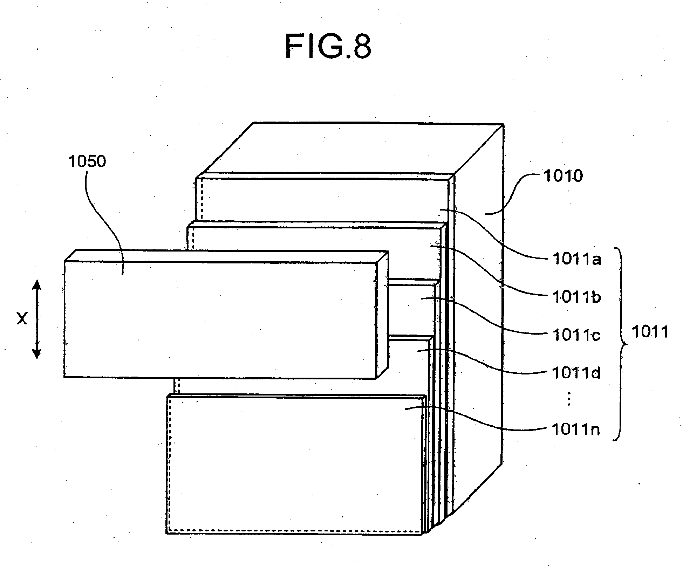

However, the reflective film 1011 included in the etalon 1010 has low manufacturability and low uniformity. Fig. 8 is a schematic for illustrating a method of forming the reflective film. The reflective film 1011 on the etalon substrate 1010 is formed, for example, by layer formation. A low refractive index material and a high refractive index material are alternately layered as vapor-deposition materials. When forming the reflective film 1011, a deposition mask 1050 is slid in the direction X so that an area of each of layers 1011a to 1011n differs along the direction X. While forming the reflective film 1011, it is necessary to replace the deposition mask 1050 with a deposition mask that matches a mask area each time the deposition material is changed, or to slide the etalon substrate 1010 in the direction X. Thus, the reflective film takes time and labor to be formed, thereby inhibiting improvement in productivity.

Furthermore, because the deposition mask 1050 is used, a vapor-deposition material tends to leak onto a back surface of the deposition mask 1050. Therefore, it is difficult to form the layer in a uniform thickness, and special measures are required to be taken to solve the leakage. As a result, the etalon, which is a main component of the tunable optical dispersion compensator, becomes costly. In addition, it becomes difficult to acquire desired characteristics regarding the dispersion compensation amount of the tunable optical dispersion compensator.

Document D1, WO 2005/026798 A1, describes a tunable dispersion compensator which includes a spacer element having a top surface and a bottom surface, a thin film multi-layer mirror formed on the top surface of the spacer element, a thin film mirror having a thermally tunable reflectivity, a highly reflective mirror element formed on the bottom surface of the spacer element and a heater element for controlling a temperature of the thermally tunable thin film mirror. Therefore, document D1 describes tuning of a dispersion compensator by controlling the temperature of a thermally tunable thin film mirror.

Document D2 describes etalon design considerations and particularly that the reflectivity of the coatings of etalons changes with the angle of incidence and thereby directly effects the finesse of the etalon.

Document D3, XP-000032961 describes angle-tuned etalon filters for optical channel selection in high density wavelength division multiplexed systems.

Document D4 describes a variable dispersion compensator which is constructed so that the light emitted from a collimator will be reflected from an etalon of 100% single-side reflectance by ranging the etalon and the mirror in parallel or with a slight angle and then enter another collimator. It is also described that the dispersion compensating elements are provided in multi-stage form and the angle of the mirror and the reflectance of the etalon can be optimized.

### SUMMARY OF THE INVENTION

It is an object of the present invention to at least solve the above problems in the conventional technologies.

The invention is defined in claim 1.

A wavelength dispersion compensation device according to one aspect of the present invention includes an etalon in a slab shape having at least two surfaces opposite to each other. The etalon includes reflective films formed on the surfaces respectively. One of the reflective films has incident angle dependency in which reflectance differs depending on an incident angle of the light, and has a filter characteristic in which the reflectance abruptly changes in a range of wavelength of light to be used for the wavelength dispersion compensation.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1A is a schematic of an etalon used in a wavelength dispersion compensation device according to an embodiment of the present invention;
Fig. 1B is a plot of a group delay characteristic of the etalon shown in Fig. 1A;
Fig. 1C is a plot of a group delay characteristic of the etalon shown in Fig. 1A;
Fig. 2 is a plot of a reflection characteristic of reflective films on the etalon;
Fig. 3 is a schematic for explaining a method of forming the reflective films;
Fig. 4A is a plot of a group delay characteristic when the etalon having the reflective films shown in Fig. 2 is configured in multistage;
Fig. 4B is a plot of a transmission characteristic when the etalon having the reflective films shown in Fig. 2 is configured in multistage;
Fig. 5 is a schematic of a wavelength dispersion compensating module;
Fig. 6 is a schematic of the etalon configured in multistage;
Fig. 7A is a schematic of a conventional tunable optical dispersion compensator;
Fig. 7B is a perspective view of the conventional tunable optical dispersion compensator; and
Fig. 8 is a schematic for explaining a method of forming a reflective film on the etalon.

### DETAILED DESCRIPTION OF THE PREFERRED EMBODIMENTS

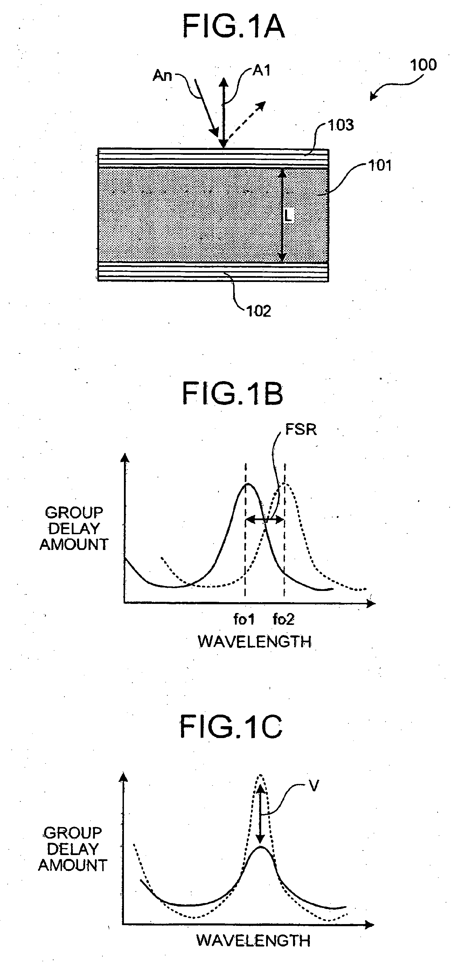

Exemplary embodiments of the present invention will be explained in detail below with reference to the accompanying drawings. Fig. 1A is a schematic of an etalon used in a wavelength dispersion compensation device according to an embodiment of the present invention. A reflective etalon 100 includes a slab-shaped etalon substrate 101 and two reflective films 102 and 103. The etalon substrate 101 has thickness L. The two reflective films 102 and 103 are formed on opposite sides of the etalon substrate 101. One reflective film 102 has a mirror surface or a high-reflection coating. A reflectance of the reflective film 102 is set to almost 100%. Another reflective film 103 is a light incident side. A reflectance of the reflective film 103 is lower than that of the other reflective film 102. In the etalon 100, a light incident on the reflective film 103 is reflected by the reflective film 102 and emitted from the reflective film 103.

Fig. 1B is a plot of a group delay characteristic of the etalon 100. A horizontal axis indicates wavelength. A vertical axis indicates a group delay amount. A central wavelength interval (free spectral range (FSR)) and a center wavelength (fo1, fo2, ....) of the etalon 100 are set based on an optical distance between the two reflective films 102 and 103 (cavity length of the etalon substrate 101, thickness L shown in Fig. 1A).

Fig. 1C is a plot of a group delay characteristic of the etalon 100. A group delay amount (finesse V) is set based on the reflectance of the reflective film 103. The group delay amount determines a dispersion compensation amount. The reflective film 103 has a low reflectance.

A light incident angle of light incident on the etalon 100 continuously changes. Light A1 has a perpendicular incident angle to the reflective film 103. Light An has a predetermined angle. By varying the light incident angle, the group delay amount is varied, thereby changing the dispersion compensation amount.

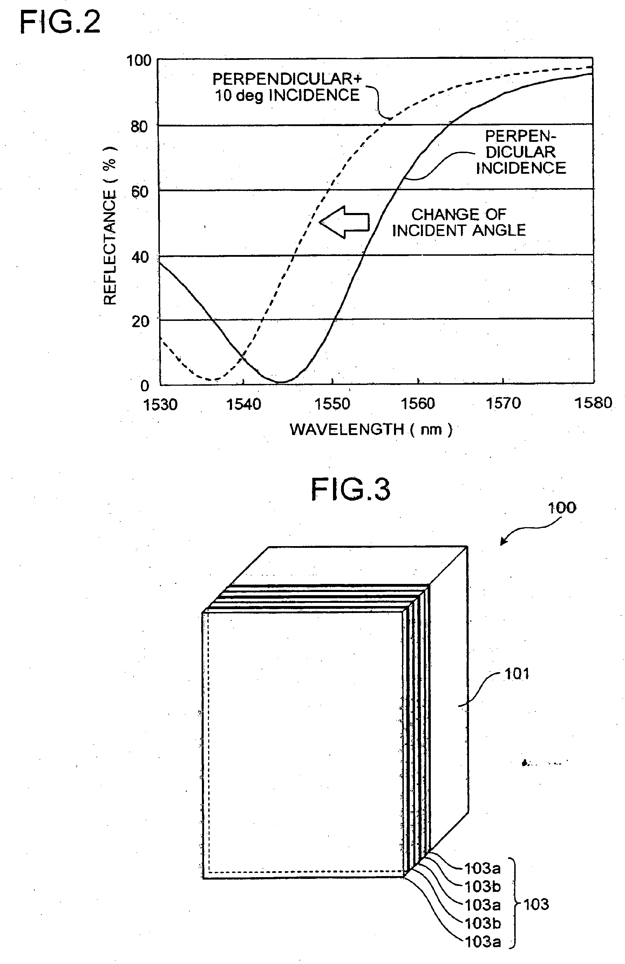

Fig. 2 is a plot of a reflection characteristic of the reflective film 103. The horizontal axis indicates the wavelength. The vertical axis indicates the reflectance. The reflective film 103 is set and formed so as to have a following characteristic. The reflectance of the reflective film 103 changes rapidly within a wavelength range to be used. As shown in Fig. 2, when the light incident angle to the reflective film 103 is perpendicular near a wavelength of 1550 nanometers (nm), the reflectance is 20%. When the light incident angle to the reflective film 103 is 10 degrees (perpendicular+10 deg incidence), the reflectance is 65%.

Therefore, when the light incident angle is changed by 10 degrees, the reflectance can be changed within a range of 20% to 65%. A characteristic of the reflective film 103, such as the above, can be actualized by setting the wavelength range to be used, to a portion (edge portion) at which filter characteristics of an optical band pass filter (BPF) and an optical band rejection filter (BRF) rapidly change. In addition, a state of changes in the reflectance with respect to the wavelength (a change rate and an angle of a characteristic line (slope)) can be arbitrarily set by adjusting the total number of layers in the reflective film 103 and thickness of each layer.

In the reflectance characteristic shown in Fig. 2, the reflectance has a continuous, rather than a gradual, wavelength dependence. The characteristic indicates that a generated group delay differs (changes) depending on wavelength. Therefore, the dispersion compensation amount can be continuously changed in a wavelength direction (every time the wavelength differs).

Fig. 3 is a schematic for explaining a method of forming the reflective film 103. The reflective film 103 is formed, for example, by alternately layering a film 103a of a low refractive index material and a film 103b of a high refractive index material by vapor-deposition. The films 103a and 103b are both formed on one side of the etalon substrate 101. The films 103a and 103b may be formed on the entire surface. Thus, a reflective film 103 having reflectance dependent on an incident angle can be formed. Each layer of the reflective film 103 can be easily formed, for example, to an arbitrary thickness by merely controlling a vapor-deposition time. A vapor-deposition mask is not required. Therefore, manufacturability can be improved, uniformity of the films can be enhanced, and characteristics for desired dispersion compensation amount can be easily acquired.

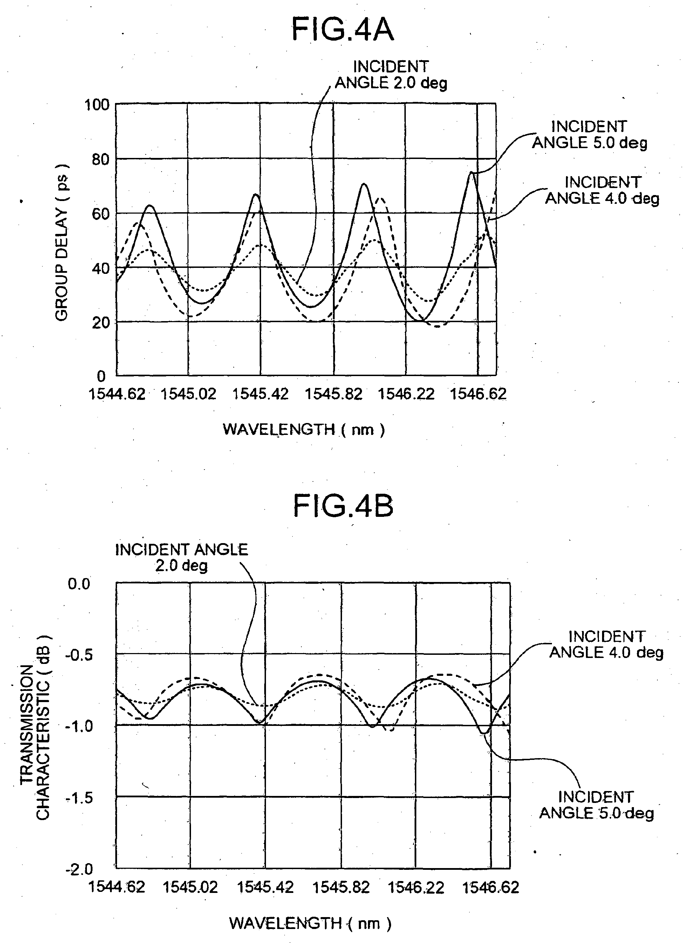

Fig. 4A is a plot of a group delay characteristic when the etalon having the reflective films shown in Fig. 2 is configured in multistage. Fig. 4B is a plot of a transmission characteristic when the etalon having the reflective films shown in Fig. 2 is configured in multistage. Respective characteristics when a light passes through the etalon in three stages. The etalon 100 is designed so that the characteristic line differs in each stage. The light can pass through the etalon 100 in each stage. Therefore, an effective bandwidth (wavelength range) on which dispersion compensation is performed by each channel, stipulated in an international telecommunication union (ITU) grid, can be increased.

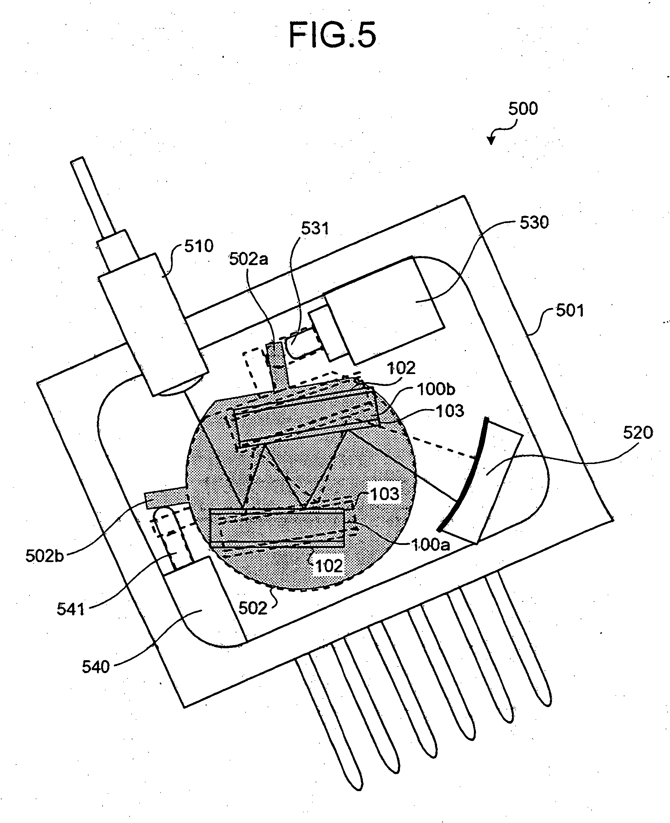

Fig. 5 is a schematic of a wavelength dispersion compensating module 500. The wavelength dispersion compensating module 500 includes two units of the etalons 100 described above. Light is incident on and emitted from one optical port. A collimator 510 is placed in one area of a housing 501. The collimator 510 is on an end of an optical fiber. The two etalons 100 (100a and 100b) are placed within the housing 501. Light emitted from the collimator 510 is incident on the etalons 100a and 100b. The etalons 100a and 100b are placed so that the respective reflective films 103 face each other. A placement angle of the etalons 100a and 100b is substantially parallel. Alternatively, one of the etalons 100 can be placed at an angle to the other one of the etalons 100 as shown in Fig. 5.

As shown in the diagram, the light emitted from the collimator 510 passes through the etalon 100a and the etalon 100b, and then, the light is reflected by a reflective body 520 to be returned. A returning path is sequentially returned through the etalon 100b and then the etalon 100a, and the light is incident on the collimator 510. The wavelength dispersion compensation module 500 has four stages structure in total in both ways.

The two etalons 100a and 100b are arranged on a stage 502. The stage 502 is rotatable about a rotation center of the stage 502 that is an approximately intermediate position between the two etalons 100a and 100b. The stage 502 is rotated by a rotation mechanism, and functions as an incident angle changing unit to change the incident angle of the light incident on the etalon 100a. The light is emitted from the collimator 510 that is an optical port. The rotation mechanism includes an extruding mechanism 530 and a biasing mechanism 540. The extruding mechanism 530 and the biasing mechanism 540 are provided beside the stage 502. The extruding mechanism 530 includes a combination of a stepping motor and a gear, or a piezo element and the like. In the extruding mechanism 530, a differential piece 531 extrudes a protrusion piece 502a of the stage 502 and rotates the stage 502. The biasing mechanism 540 includes a return spring and generates a bias force in a direction opposite of an extrusion direction of the extruding mechanism 530. The bias force is transmitted to a protrusion piece 502b of the stage 502, via a differential piece 541.

According to the wavelength dispersion compensating module 500, the stage 502 is rotated by the extruding mechanism 530 being operated. Due to the rotation, the incident angle of the light emitted from the collimator 510 to the two etalons 100a and 100b can be changed. For example, as shown in Fig. 4A and Fig. 4B, changes in the group delay frequency characteristic and the transmission characteristic corresponding to the light incident angle can be achieved (however, because the configuration shown in Fig. 5 is the four-stage structure, the characteristics thereof differ from that of the three-stage structure shown in Fig. 4A and Fig. 4B).

According to the configuration shown in Fig. 5, the light can be incident on and emitted from a single optical port. Therefore, the number of components in the wavelength dispersion compensating module 500 can be reduced and the wavelength dispersion compensating module 500 can be downsized. Furthermore, the wavelength dispersion compensating module 500 can be manufactured at a low cost. The configuration of the wavelength dispersion compensating module 500 is not limited to that described above. A light incident port and a light emitting port can be separately provided. In addition, as another configuration example of the rotation mechanism, a motor with a gear can be placed on the rotation center of the stage 502 to rotate the stage 502. Other than the configuration in which the stage 502 on which the etalon 100 is mounted is rotated, the light incident angle to the etalon 100 can be changed by the etalon 100 side being held stationary and the angle of the light incident port being changed. The light incident angle to the etalon 100 can be relatively changed. Although the wavelength dispersion compensating module 500 has the four-stage structure, the configuration is not limited thereto. The wavelength dispersion compensating module 500 can have multiple stages and an arbitrary dispersion compensation amount can be attained.

Fig. 6 is a schematic of an etalon configured in multistage. The placement of the two etalons 100a and 100b is the same as that in Fig. 5. A light refracting component 700, for example, a prism, is placed on a surface of the reflective film 103 of the etalon 100b. The light refracting component 700 has a tilt angle θ2 so that the incident surface is parallel to the surface of the reflective film 103 of the etalon 100a. In the example shown in Fig. 6, the tilt angle θ2 of the light refracting component 700 is almost equal to a light incident angle θ1 to the etalon 100a. As a result, the incident angle of the light incident on the etalon 100b can be adjusted depending on the tilt angle θ2.

According to the configuration shown in Fig. 6, the same etalon can be applied to the etalons 100a and 100b opposing to each other to form the multi-stage configuration. In addition, it is possible to configure the etalon such that the etalon 100a and the etalon 100b have different compensation amounts, as a slope characteristic (see Fig. 4A and Fig. 4B) when the etalon is configured in multistage. The compensation amount between each stage can be varied by a use of the etalons 100a and 100b, and dispersion compensation of all stages combined can be performed. Furthermore, changes in wavelength interval difference (FSR) can be suppressed, even when there is a plurality of stages.

According to the embodiment explained above, the reflective film having a different reflectance depending on the light incident angle can be easily formed. Therefore, the manufacturability of the etalon can be improved, and the wavelength dispersion compensation device can be manufactured at a low cost. Furthermore, the reflectance can be made wavelength dependent. As a result, a wavelength dispersion compensation device that corresponds to required dispersion compensation characteristics can be manufactured.

The etalon substrate 101 can be formed with silicon or zinc selenide that are high-refraction materials. By a use of the high-refraction material, the changes in the wavelength interval caused by the changes in the light incident angle can be suppressed. Therefore, a variable range (number of wavelengths) can be increased.

According to the embodiments described above, it is possible to obtain required dispersion compensation amount with ease. Moreover, it is possible to manufacture a wavelength dispersion compensation device easily at low cost.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A wavelength dispersion compensation device (500) comprising:
an input port (510) through which an incident light is input;
an output port (510) through which the incident light is output;
a first etalon (100a) that is configured to reflect the incident light from the input port to the output port, and includes a reflective film (103) of which reflectance changes according to incident angle of the incident light; and
an angle changing unit (530, 531, 540, 541) that adjusts dispersion compensation of the incident light by changing angle of the etalon with respect to the incident light,
wherein a rate of change of the reflectance of the reflective film according to the incident angle is determined based on required dispersion compensation characteristic.

2. The wavelength dispersion compensation device according to claim 1, wherein the reflective film (103) comprises multiple layers and is provided on the surface of the etalon, and the layers are formed by alternately layering a first film (103a) and a second film (103b) of different reflective indices.

3. The wavelength dispersion compensation device according to claim 2, wherein number of the layers is determined based on required dispersion compensation characteristics.

4. The wavelength dispersion compensation device according to claim 2, wherein thickness of each of the layers is determined based on required dispersion compensation characteristics.

5. The wavelength dispersion compensation device according to claim 1, further comprising another etalon (100b) that forms a pair of etalons with the etalon (100a), wherein the incident light from the input port is reflected between the pair of etalons for a given number of times.

6. The wavelength dispersion compensation device according to claim 5, further comprising a reflective body (520) that reflects the incident light from the pair of etalons back to the pair of etalons so that the incident light inputs and outputs through one port that functions as both input port and output port.

7. The wavelength dispersion compensation device according to claim 5, wherein the angle changing unit includes a rotating unit that rotates a stage (502) on which the pair of etalons is mounted.

8. The wavelength dispersion compensation device according to claim 5, further comprising a light refracting member (700) provided on one of the pair of etalons.

9. The wavelength dispersion compensation device according to claim 1, wherein a substrate of the etalon is formed with a high-refraction material.

10. The wavelength dispersion compensation device according to claim 9, wherein the high-refraction material includes silicon.

11. The wavelength dispersion compensation device according to claim 9, wherein the high-refraction material includes zinc selenide.

12. The wavelength dispersion compensation device according to claim 2, wherein each of the layers is formed on substantially entire surface of the etalon.

## Patentansprüche

1. Wellenlängendispersions-Kompensationsvorrichtung (500), umfassend:
einen Eingangsanschluss (510), durch welchen ein Einfallslicht eingegeben wird;
einen Ausgangsanschluss (510), durch welchen das Einfallslicht ausgegeben wird;
ein erstes Etalon (100a), das eingerichtet ist, das Einfallslichts von dem Eingangsanschluss zu dem Ausgangsanschluss zu reflektieren, und einen reflektiven Film (103) enthält, dessen Reflektanz sich entsprechend dem Einfallswinkel des Einfallslichts ändert; und
eine Winkeländerungseinheit (530, 531, 540, 541), die eine Dispersionskompensation des Einfallslichts durch Ändern eines Winkels des Etalons hinsichtlich des Einfallslichts anpasst,
wobei eine Änderungsrate der Reflektivität des reflektiven Films gemäß dem Einfallswinkel bestimmt wird basierend auf einer erforderlichen Dispersionskompensations-Charakteristik.

2. Wellenlängen-Dispersionskompensationsvorrichtung nach Anspruch 1, wobei der reflektive Film (103) mehrere Schichten umfasst und auf der Oberfläche des Etalons aufgebildet ist, und die Schichten gebildet werden durch alternierendes Schichten eines ersten Films (103a) und eines zweiten Films (103b) verschiedener reflektiver Indizes.

3. Wellenlängen-Dispersionskompensationsvorrichtung nach Anspruch 2, wobei die Anzahl der Schichten basierend auf benötigten Dispersionskompensations-Charakteristiken bestimmt wird.

4. Wellenlängen-Dispersionskompensationsvorrichtung nach Anspruch 2, wobei die Dicke jeder basierend auf benötigten Dispersionskompensations-Charakteristiken Schicht bestimmt wird.

5. Wellenlängen-Dispersionskompensationsvorrichtung nach Anspruch 1, weiterhin umfassend ein anderes Etalon (100b), das ein Etalon-Paar mit dem Etalon (100a) bildet, wobei das Einfallslicht von dem Eingangsanschluss zwischen dem Etalon-Paar für eine gegeben Anzahl von Malen reflektiert wird.

6. Wellenlängen-Dispersionskompensationsvorrichtung nach Anspruch 5, weiterhin umfassend einen reflektiven Körper (520), der das Einfallslicht von dem Etalon-Paar zurück zu dem Etalon-Paar reflektiert, so dass das Einfallslicht durch einen Anschluss eingegeben und ausgegeben wird, der sowohl als Eingangsanschluss als auch als Ausgangsanschluss fungiert.

7. Wellenlängen-Dispersionskompensationsvorrichtung nach Anspruch 5, wobei die Winkeländerungseinheit eine Rotationseinheit enthält, die eine Plattform (502) rotiert, auf der das Etalon-Paar befestigt ist.

8. Wellenlängen-Dispersionskompensationsvorrichtung nach Anspruch 5, weiterhin umfassend ein Lichtbrechungsbauteil (700), das auf einem der Etalon-Paare angebracht ist.

9. Wellenlängen-Dispersionskompensationsvorrichtung nach Anspruch 1, wobei ein Substrat des Etalons mit einem hoch brechenden Material ausgebildet ist.

10. Wellenlängen-Dispersionskompensationsvorrichtung nach Anspruch 9, wobei das hoch brechende Material Silikon enthält.

11. Wellenlängen-Dispersionskompensationsvorrichtung nach Anspruch 9, wobei das hoch brechende Material Zink-Selenid enthält.

12. Wellenlängen-Dispersionskompensationsvorrichtung nach Anspruch 2, wobei jede Schicht auf im Wesentlichen der gesamten Oberfläche des Etalons ausgebildet ist.

## Revendications

1. Dispositif de compensation de dispersion de longueur d'onde (500) comprenant :
un orifice d'entrée (510) à travers lequel une lumière incidente est introduite ;
un orifice de sortie (510) à travers lequel la lumière incidente est émise ;
un premier étalon (100a) qui est configuré pour réfléchir la lumière incidente provenant de l'orifice d'entrée vers l'orifice de sortie, et comporte un film réfléchissant (103) dont le facteur de réflexion varie selon l'angle d'incidence de la lumière incidente ; et
une unité de changement d'angle (530, 531, 540, 541) qui ajuste la compensation de dispersion de la lumière incidente par changement de l'angle de l'étalon par rapport à la lumière incidente,
dans lequel un taux de variation du facteur de réflexion du film réfléchissant selon l'angle d'incidence est déterminé sur la base d'une caractéristique de compensation de dispersion requise.

2. Dispositif de compensation de dispersion de longueur d'onde selon la revendication 1, dans lequel le film réfléchissant (103) comprend de multiples couches et qui est prévu sur la surface de l'étalon, et les couches sont formées par superposition de manière alternée d'un premier film (103a) et d'un deuxième film (103b) d'indices de réflexion différents.

3. Dispositif de compensation de dispersion de longueur d'onde selon la revendication 2, dans lequel le nombre des couches est déterminé sur la base de caractéristiques de compensation de dispersion requises.

4. Dispositif de compensation de dispersion de longueur d'onde selon la revendication 2, dans lequel l'épaisseur de chacune des couches est déterminée sur la base de caractéristiques de compensation de dispersion requises.

5. Dispositif de compensation de dispersion de longueur d'onde selon la revendication 1, comprenant en outre un autre étalon (100b) qui forme une paire d'étalons avec l'étalon (100a), où la lumière incidente provenant de l'orifice d'entrée est réfléchie entre la paire d'étalons un nombre donné de fois.

6. Dispositif de compensation de dispersion de longueur d'onde selon la revendication 5, comprenant en outre un corps réfléchissant (520) qui renvoie la lumière incidente provenant de la paire d'étalons vers la paire d'étalons de sorte que la lumière incidente entre et sorte à travers un orifice qui sert à la fois d'orifice d'entrée et d'orifice de sortie.

7. Dispositif de compensation de dispersion de longueur d'onde selon la revendication 5, dans lequel l'unité de changement d'angle comporte une unité de rotation qui fait tourner un étage (502) sur lequel la paire d'étalons est montée.

8. Dispositif de compensation de dispersion de longueur d'onde selon la revendication 5, comprenant en outre un élément de réfraction de lumière (700) prévu sur l'un de la paire d'étalons.

9. Dispositif de compensation de dispersion de longueur d'onde selon la revendication 1, dans lequel un substrat de l'étalon est formé avec un matériau à haute réfraction.

10. Dispositif de compensation de dispersion de longueur d'onde selon la revendication 9, dans lequel le matériau à haute réfraction comporte du silicium.

11. Dispositif de compensation de dispersion de longueur d'onde selon la revendication 9, dans lequel le matériau à haute réfraction comporte du séléniure de zinc.

12. Dispositif de compensation de dispersion de longueur d'onde selon la revendication 2, dans lequel chacune des couches est formée essentiellement sur toute la surface de l'étalon.
